# EUROPÄISCHE PATENTSCHRIFT

(11) **EP 0 946 269 B1**
(45) Veröffentlichungstag und Bekanntmachung des Hinweises auf die Patenterteilung: **22.05.2002**
(21) Anmeldenummer: 97948867.3
(22) Anmeldetag: 03.11.1997
(51) Int. Cl.: B01D 65/08, C02F 5/12, B01D 61/04, B01D 61/16

(54) **VERHINDERUNG UND VERZÖGERUNG DER BELAGSBILDUNG IN MEMBRANPROZESSEN**
INHIBITION AND DELAY OF DEPOSIT FORMATION IN MEMBRANE PROCESSES
INHIBITION ET RALENTISSEMENT DE LA FORMATION DE DEPOTS DANS DES PROCESSUS MEMBRANAIRES

(30) Priorität: 15.11.1996 DE 19647293
(43) Veröffentlichungstag der Anmeldung: 06.10.1999
(73) Patentinhaber: BAYER AG, 51368 Leverkusen (DE)
(72) Erfinder: ZARGES, Wolfgang, D-51065 Köln (DE); GROTH, Torsten, D-51519 Odenthal (DE); JOENTGEN, Winfried, D-51067 Köln (DE); GRÖSCHL, Andreas, D-51375 Leverkusen (DE)
(86) Internationale Anmeldenummer: EP9706065
(87) Internationale Veröffentlichungsnummer: WO9822205

(56) Entgegenhaltungen:
- EP-A- 0 705 794
- US-A- 4 534 881
- US-A- 5 256 303
- US-A- 5 288 783
- US-A- 5 373 086
- US-A- 5 523 023
- US-A- 5 525 257

## Beschreibung

Die Erfindung betrifft den Einsatz von Gemischen von Polyasparaginsäuren mit Emulgatoren zur Verhindung oder Verzögerung der Belagsbildung durch schwerlösliche organische und anorganische Bestandteile im Feed von Membranprozessen.

Bei der Trennung fluidisierter Systeme spielt die Membrantechnik eine bedeutende Rolle. Zu etablierten Verfahren der Technik gehören heute die Gewinnung von Trinkwasser aus Meerwasser mittels Reversosmose ebenso wie die Produktaufarbeitung mittels Ultra- und Nanofiltration.

In Membranprozessen werden in der Regel verdünnte Lösungen aufkonzentriert und organische Lösungsmittel, Wasser oder Salzlösungen abgetrennt. Dabei werden entweder Wertstoffe oder Schadstoffe in konzentrierteren und gegebenenfalls salzärmeren Lösungen erhalten, wodurch sich nachfolgende Lagerung, Transport, Entsorgung und Weiterverarbeitung kostengünstiger gestalten lassen. Im Falle der Abwasseraufarbeitung ist es das Ziel der Membranbehandlung, den größten Teil des Volumens als Permeat in einer nicht oder nur gering belasteten Form, beispielsweise für einen Wiedereinsatz, zu gewinnen. Das aufkonzentrierte Retentat kann mit geringerem Aufwand bezüglich noch vorhandener Wertstoffe aufgearbeitet oder in dieser konzentrierten Form, beispielsweise durch Verbrennung, kostengünstiger entsorgt werden.

Das Gebiet der Membranverfahren umfaßt sehr unterschiedliche Prozesse. Entsprechend unterschiedlich sind auch die Membranen und deren technische Bauformen, die Module. Handelsübliche Membranen werden beispielsweise aus organischen Materialien wie Polysulfon, Celluloseacetat, Polyamid oder PVDF oder anorganischen Materialien wie TiO₂, ZrO₂ oder Al₂O₃ hergestellt; sie werden in Form von Kapillar-, Rohr- oder Flachmembranen eingesetzt.

Technisch relevante Membrantrennverfahren werden überwiegend als Querstromfiltrationen betrieben. Hohe Wandschubspannungen, realisiert durch hohe Strömungsgeschwindigkeiten und spezielle Modulkonstruktionen sollen die Membranverschmutzung minimieren bzw. verhindern. Im allgemeinen wird aber in technischen Membranprozessen bei der Aufkonzentrierung von Feedströmen dennoch eine Abnahme der Permeatleistung infolge von Fouling, der Akkumulation von Material an der Membran, festgestellt.

Scaling, die Membranverkrustung durch anorganische Salze infolge der Überschreitung ihrer Löslichkeitsgrenze, ist ein Spezialfall des Foulings. Als anorganische Salze sind hier vorrangig die durch die Härtebildner des Wassers bedingten Calcium- und Magnesium-carbonate, -hydroxide, -phosphate, -sulfate und -fluoride zu nennen. Bei der Abwasseraufarbeitung stellen Schwermetallhydroxide wie z.B. Eisen- und Chrom-hydroxide ein zusätzliches Problem dar. Mit Scaling ist immer zu rechnen, wenn in einem Prozeß hohe Permeatausbeuten, wie z.B. bei der Abwasseraufkonzentrierung, Rein- und Trinkwassergewinnung angestrebt werden. Aber auch bei der Entsalzung und Aufkonzentrierung von Produktlösungen kann natürlich dieses Phänomen auftreten. Hier betrachtete Membranverfahren sind Ultra- und Nanofiltration, Reversosmose, Dialyse und Pervaporation.

Fouling und Scaling als ein Spezialfall des Foulings führen dazu, daß die Permeationsleistung einer Membrananlage letztendlich auf ein unwirtschaftlich niedriges Maß absinkt. Von Zeit zu Zeit ist daher der Feedstrom abzustellen und die Membran zu reinigen. Ein solcher Reinigungsvorgang hat jedoch mehrere Nachteile: Die Reinigung bedeutet eine Betriebsunterbrechung. Ein kontinuierlicher Betrieb ist also nur durch das Vorhalten einer parallelen Membranapparatur aufrecht zu erhalten. Weiter ist je nach Art der Ablagerungen der Einsatz von chemischen Reinigungsmitteln erforderlich, die häufig biologisch schlecht abbaubare Tenside und Komplexbildner enthalten und separat entsorgt werden müssen. Schließlich wird bei der Reinigung im allgemeinen nicht der gesamte Belag entfernt, weshalb die Membranen bei ihrem erneuten Einsatz selten ihren ursprünglichen Permeatfluß erreichen.

Ist bei einem Prozeß mit Scaling zu rechnen, so können zu dessen Verhinderung Vorbehandlungsmaßnahmen, z.B. durch den Einsatz von Ionenaustauschern, die aus dem Feld der Wasserenthärtung bekannt sind, ergriffen werden. Weiterhin erlaubt das gezielte Einbringen von Feststoffteilchen in der Seeding- und Wirbelschichttechnik bei bestimmten Scalant- und Modulsystemen eine physikalische Kontrolle der Membranverkrustung (Chem.-Ing.-Tech. 59 (1987) 187). Hydroxidablagerungen können oftmals durch Einstellung geeigneter pH-Werte vermieden werden. Weiter hat es nicht an Versuchen gefehlt, dem zu bearbeitenden Feedstrom bereits Komplexbildner wie NTA oder EDTA zuzusetzen. Neben den nicht unumstrittenen nachteiligen ökotoxikologischen Eigenschaften müssen die Komplexbildner in äquimolaren Mengen zugegeben werden. Dispergiermittel, sogenannte Thresholdinhibitoren, können im Gegensatz zu den Komplexiermitteln in unterstöchiometrischen Mengen wirksam zur Verhinderung oder Verzögerung von Fouling und Scaling in Membranprozessen eingesetzt werden.

In Desalination **54**, 263-76 (1985), zitiert nach Chem. Abstracts, 104, 56 102, werden Polyphosphate, Phosphonate, Polystyrolsulfonate, Polyacrylamide und Polyacrylate bezüglich der Scale-inhibierenden Wirkung untersucht. In US 5 256 303 wird die Inhibierung der Calciumsulfat-Kristallisation und der Ablagerung in Feedströmen untersucht, die durch ein Membran-System geleitet werden. Dabei werden N-substituierte Polyacrylamide und Phosphonobutan-1,2,4-tricarbonsäure als Scale-Inhibitoren eingesetzt. In EP 0 705 794 wird eine Methode zur Verhinderung der Kristallisation von Sulfaten in wäßrigen Systemen beschrieben. Eingesetzt werden dabei eine oder mehrere Polyaminosäuren und eines oder mehrere anorganische Phosphate, die jedoch aufwendig entsorgt werden müssen oder die Vorflutergewässer eutrophieren. In US 5 286 810 wird die Herstellung von hochmolekularen Polyasparaginsäure-Copolymeren beschrieben, die ebenfalls als Scale-Inhibitoren in verschiedenen technischen und hygienischen Bereichen verwendet werden können; ohne konkrete Angabe von Einzelheiten werden auch Reversosmosemembranen erwähnt. In US 5 525 257 werden Mischungen aus Polyasparaginsäuren und deren Derivaten mit anderen Polycarbonsäuren und deren Verwendung in der Wasserbehandlung beschrieben. Die Mischungen können gegebenenfalls auch Tenside enthalten. Als Polycarbonsäuren werden Polyacrylate, Polymaleinate und Polysulfonate genannt; auch hier wird die Reversosmose ohne nähere Angaben erwähnt. Gemäß US 5 466 760 werden Copolymere von Polysuccinimid aus Maleinsäure, Ammoniak und einem Polyamin als Inhibitoren von Salzablagerungen eingesetzt. In EP-B 530 358 (= US 5 373 086) wird eine spezielle Polyasparaginsäure-Zusammensetzung beschrieben, die durch Erhitzen pulverförmiger L-Asparaginsäure auf wenigstens 188°C und Kondensation, weiterem Erhitzen auf wenigstens 216°C, bis wenigstens 80 % der Polysuccinimidbildung abgelaufen ist, und anschließender Hydrolyse des Polysuccinimids erhalten wird, zu über 50 % in der β-Form vorliegt und ein Mol.-Gew. von 1000 bis 5000 (Gewichtsmittel) aufweist, die zur Inhibierung von Fällungen von CaCO₃ oder Ca₃(PO₄)₂ eingesetzt wird. Diese spezielle Polyasparaginsäure soll in einem weiten technischen Bereich von der Brauchwasserbehandlung bis zur Ölförderung eingesetzt werden können; nebenbei wird ohne nähere Hinweise auch die Reversosmose erwähnt.

Zusammenfassend kann daher gesagt werden, daß nach dem bisherigen Stand der Technik in Membranprozessen Phosphonate und Polyacrylate zur Scale-Inhibierung verwendet wurden. Polyasparaginsäuren werden in zahlreichen Veröffentlichungen als brauchbare Scale-Inhibitoren angeführt. Es lagen jedoch bis heute keine Resultate vor, die die Einsetzbarkeit von Polyasparaginsäuren in Membranprozessen belegen. Dem Fachmann ist dabei bekannt, daß eine wirksame Scale-Inhibierung immer vom Gesamt-System, also allen beteiligten Komponenten und Bedingungen, abhängt. Gerade in Membranprozessen sind viele chemische und physikalische Störfaktoren gegenwärtig, die es nicht erwarten lassen, daß ein in einem anderen Anwendungsgebiet mit gutem Ergebnis untersuchter Scale-Inhibitor auch gerade in Membranprozessen gut wirksam ist.

Es wurde nun überraschenderweise gefunden, daß bei der Verwendung von Gemischen von Polyasparaginsäuren mit Emulgatoren in unterschiedlichen Membranprozessen eine Verhinderung und Verzögerung der Scale-Bildung durch schwerlösliche organische und anorganische Bestandteile auf Membranen erreicht werden kann. Die Verwendung der biologisch abbaubaren Polyasparaginsäuren ist von Vorteil, da sie biologisch nicht oder schwer abbaubare Phosphonate und Polyacrylate ersetzen können, die Verfügbarkeit der Membrananlagen erhöhen und die Anzahl der Reinigungsintervalle verringern.

Die Erfindung betrifft daher ein Verfahren zur Durchführung von Membranprozessen zur Behandlung wäßriger Feeds mit anorganischen und organischen Inhaltsstoffen unter Verhinderung oder Verzögerung der Scale-Bildung auf den Membranen durch Zusatz eines Scale-Inhibitors, das dadurch gekennzeichnet ist, daß als Scale-Inhibitor Gemische von Polyasparaginsäuren mit Emulgatoren der Alkylsulfonate und der Alkoxylate eingesetzt werden, wobei die Polyasparaginsäuren in einer Menge von 1-50 000 ppm, bezogen auf das wäßrige Feed, eingesetzt werden.

In einer weiteren Ausführungsform betrifft die Erfindung die Verwendung von Gemischen von Polyasparaginsäuren mit Emulgatoren in Gegenwart von Polyacrylaten oder Phosphonaten, wie z.B. der Phosphonobutantricarbonsäure oder mehreren von ihnen, da durch den Zusatz von Polyasparaginsäuren die biologische Abbaubarkeit solcher Gemische verbessert wird.

Die erfindungsgemäß einzusetzenden Polyasparaginsäuren können auf unterschiedliche Weise hergestellt werden. So kann die Herstellung aus Maleinsäureanhydrid, Wasser und Ammoniak und/oder den sich daraus ableitenden Folgeprodukten wie z.B. Maleinsäure-NH₄-Salz, Maleinamidsäure, Asparaginsäure, Asparagin und Iminodibernsteinsäure erfolgen. Es können auch deren Ammoniumsalze eingesetzt werden. Gemische, in denen alle vorher genannten Komponenten nebeneinander enthalten sind, können ebenfalls zur Herstellung von Polyasparaginsäuren verwendet werden. Die Herstellung kann auch aus den vorher genannten Komponenten thermisch in Gegenwart von sauren Katalysatoren, wie z.B. Phosphorsäure, Phosphonsäuren, Sulfonsäuren oder Schwefelsäure erfolgen, die für den Aufbau von Peptidbindungen förderlich sind.

Die aus der Kondensation zunächst hervorgehenden Polyasparaginsäuren bzw. Polysuccinimide werden in der Regel einer Solvolyse oder Hydrolyse, bevorzugt einer alkalischen Hydrolyse, gegebenenfalls in Gegenwart von Aminen, wie z.B. Ethanolaminen, oder Alkoholen, wie z.B. Ethylenglykol oder Propantriol, unterzogen. Die so gebildeten Polyasparaginsäuren werden bevorzugt in Form ihrer Salze zur Verhinderung und Verzögerung der Scale-Bildung eingesetzt werden. Herstellungsbeispiele für die erfindungsgemäß einzusetzenden Polyasparaginsäuren sind in den folgenden Literaturquellen enthalten: In J. Org. Chem **26**, 1084 (1961) wird Polyasparaginsäure durch die thermische Kondensation von Asparaginsäure hergestellt. In US 4 839 461 werden Maleinsäure und Ammoniak bei 120-150°C umgesetzt. In US 5 288 783 werden Maleinsäure und Fumarsäure mit Ammoniak bei 170-350°C zur Reaktion gebracht. In US 5 493 004 entstehen Polyasparaginsäuren aus der Reaktion von Maleinsäureanhydrid und Ammoniak in einem Rohrreaktor. Das daraus resultierende Produkt kann gegebenenfalls in einem Hochviskosreaktor weiter polymerisiert werden. Allen Herstellungsmethoden ist es gemeinsam, daß die zunächst entstehenden Polysuccinimide anschließend einer Solvolyse oder Hydrolyse, bevorzugt einer alkalischen Hydrolyse unterworfen werden. Zur Bildung von Derivaten können aber auch Amine, Aminoalkohole und Alkohole eingesetzt werden.

Die erfindungsgemäß einzusetzenden Polyasparaginsäuren können in Abhängigkeit vom Herstellungsverfahren folgende Strukturelemente in unterschiedlichen Mengen enthalten:
a) Asparaginsäure-Einheiten 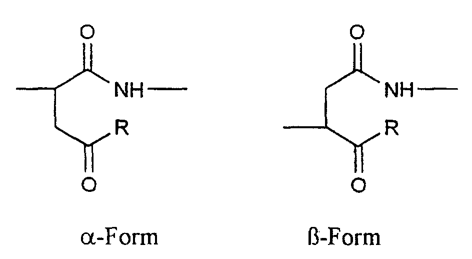
b) Succinimid-Einheiten 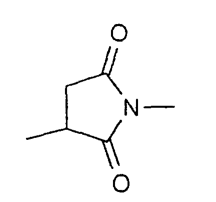
c) Äpfelsäure-Einheiten 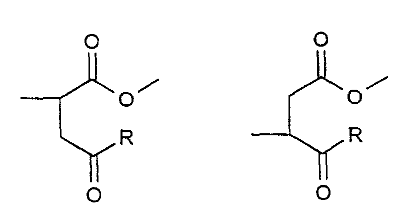
d) Olefinische Einheiten 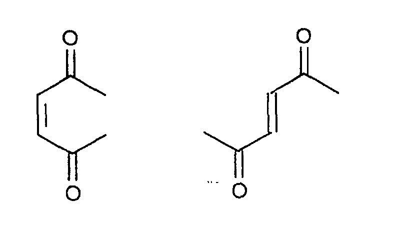
e) Iminodibernsteinsäure-Einheiten 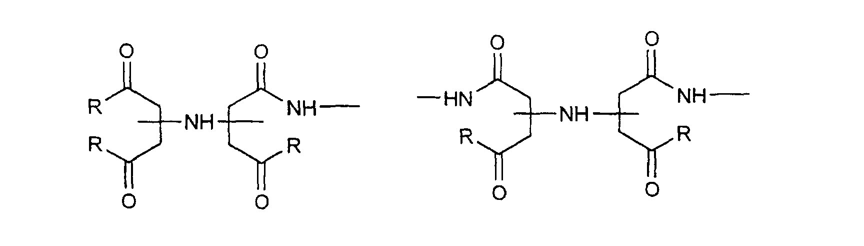 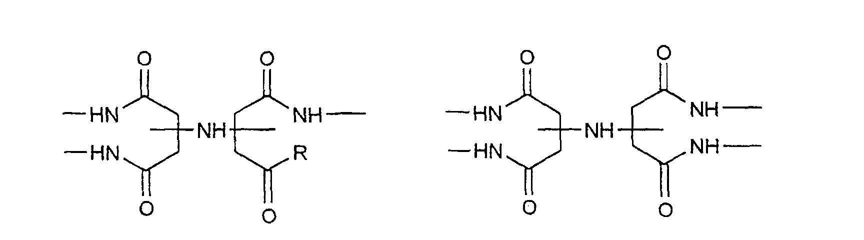 In allen dargestellten Strukturelementen bedeutet R = OH, ONa, OLi, OK, ONH₄, NH₂, OH₃NCH₂CH₂OH, OH₂N(CH₂CH₂OH)₂, OHN(CH₂CH₂OH)₃ oder OCH₂CH₂OH.

Die erfindungsgemäß einzusetzenden Polyasparaginsäuren können Molekulargewichte, bezogen auf den Gewichtsmittelwert Mw aus GPC (Gelpermeationschromatographie), von 500 - 50000, bevorzugt von 1000 - 20000 und besonders bevorzugt von 1500 - 10000 aufweisen.

Die qualitative und quantitative Bestimmung der Strukturelemente erfolgt mittels NMR- und FT-IR-Spektroskopie, Massenspektrometrie, HPLC, GC und Elementaranalyse. Die Peptidbindungen können in der α- und β-Form vorliegen. Generell weisen die Polyasparaginsäuren ein α/β-Gemisch auf, wobei der Anteil der β-Form größer ist, als der Anteil der α-Form.

Die Polyasparaginsäuren werden erfindungsgemäß in Kombination mit einem Emulgator eingesetzt. Geeignete Emulgatoren sind die anionischen Alkylsulfonate und die nichtionischen Polyglycolether (Alkoxylate). Bevorzugt ist die Verwendung von linearen Alkylsulfonaten und von Polyglycolethern aliphatischer Alkohole. Besonders bevorzugt ist die Verwendung von linearen C₁₂-C₁₇-Alkylsulfonaten und von ungesättigten und/oder gesättigten aliphatischen C₁₀-C₂₀-Alkoholen, die mit 6-60 Ethylenoxid-Einheiten verethert worden sind.

Die Mischungen aus Polyasparaginsäuren und Emulgatoren sind so bemessen, daß sie die Aufgabe der Scale-Verzögerung und Scale-Verhinderung erfüllen. Überwiegt die Belagsbildung durch anorganische und organische Salze von Erdalkali- und Schwermetallionen, so werden überwiegend Polyasparaginsäuren eingesetzt. Sofern die Belagsbildung durch unpolare organische Substanzen überwiegt, werden Emulgatoren verstärkt eingesetzt. In Abhängigkeit von dem Fouling und Scaling in einem Membranprozeß können die Mengenverhältnisse von Polyasparaginsäuren zu Emulgatoren bemessen werden. Das Gewichtsverhältnis von Polyasparaginsäuren zu Emulgatoren kann daher bis 1:99 betragen, bevorzugt bis 10:90, besonders bevorzugt bis 50:50.

Die Polyasparaginsäuren können in ihren Mischungen mit Emulgatoren in Kombination mit Polyacrylaten und Phosphonaten eingesetzt werden. Dabei wird die biologische Abbaubarkeit der resultierenden Wirkstoffmischungen, verglichen mit der biologischen Abbaubarkeit der Polyacrylate und Phosphonate, erhöht, ohne die belagsverhindernde Wirkung zu verringern.

Die Polyasparaginsäuren in Mischungen mit Emulgatoren werden in Membranprozessen bei pH-Werten von 3 bis 12,5, bevorzugt bei 4,5 bis 11, besonders bevorzugt bei 6 bis 10 eingesetzt. Sofern der pH-Wert nicht durch den eingesetzten Feedstrom im Membranprozeß bestimmt wird, können beliebige Säuren und Basen zur pH-Wert-Einstellung verwendet werden, vorzugsweise solche Säuren und Basen, die mit anderen Feed-Inhaltsstoffen keine schwerlöslichen Salze ergeben. Die Säuren und Basen sollten allerdings keinen schädigenden Einfluß auf die Inhaltsstoffe des Feedstromes, auf die metallischen Werkstoffe und Membran ausüben.

Die Polyasparaginsäuren in Mischungen mit Emulgatoren, werden in Membranprozessen bei einer Temperatur von 10 bis 90°C, bevorzugt 15 bis 70°C, besonders bevorzugt 20 bis 50°C eingesetzt.

Die in den Membranprozessen verwendeten Membranen können aus anorganischen Materialien, wie z.B. Keramik, TiO₂, ZrO₂ oder Al₂O₃ oder aus organischen Polymeren wie z.B. Celluloseestern (Celluloseacetat, Celluloseacetobutyrat, Cel luloseacetopropionat), Polyamiden, Polyimiden, Polyestern, Polyethersulfon, Polyetherketon, Polysulfon oder PVDF bestehen. In bevorzugter Weise wird das erfindungsgemäße Verfahren auf Nanofiltrations- und Ultrafiltrationsmembranen aus den genannten Materialien angewandt. In weiterhin bevorzugter Weise wird das erfindungsgemäße Verfahren auf Reversosmosemenbranen mit einer selektiven Trennschicht aus Polyamid angewandt. In besonders bevorzugter Weise besteht die selektive Trennschicht für Membranen aller genannter Verfahren aus Polyamid. Alle im erfindungsgemäßen Verfahren eingesetzten Membranen sind in einer dem Fachmann bekannten Weise asymmetrisch oder vom Dünnfilm-Komposit-Typ.

Die Polyasparaginsäuren in Mischungen mit Emulgatoren, können zur Verhinderung und Verzögerung der Scale-Bildung auf Membranen in Membranprozessen eingesetzt werden, die mit wäßrigen und lösungsmittelhaltigen wäßrigen Feedströmen versorgt werden. Generell müssen die Feedströme so beschaffen sein, daß die Wirkstoffe zunächst gelöst vorliegen und dadurch ihre Wirkung entfalten können. Ebenso sollten für eine optimale Wirkung die Scaling/Fouling verursachende Verbindung/Salze zunächst gelöst vorliegen und erst beim Membranprozeß die Löslichkeitsgrenze überschreiten. Beispiele für Feeds, die erfindungsgemäß behandelt werden können, sind: Meerwasser, Deponiesickerwasser, industrielle und kommunale Abwässer, Produktströme mit einem Scaling-Potential.

Die Polyasparaginsäuren in Mischungen mit Emulgatoren werden zu dem Feedstrom, der in einer Membrananlage behandelt werden soll, in einer Menge von 1-50 000 ppm, bevorzugt in einer Menge von 5-5000 ppm, besonders bevorzugt in einer Menge von 10-500 ppm, ganz besonders bevorzugt 50-500 ppm zugesetzt.

### Beispiele:

Es wird darauf hingewiesen, daß die Beispiele die Verwendung von Polyasparaginsäuren und nicht die erfindungsgemäße Verwendung von Gemischen von Polyasparaginsäuren mit Emulgatoren betreffen.

### Beispiel 1

Ein Lab 20 Plattenmodul wurde mit je 1 Platte (=2 Flachmembranen) einer Ultrafiltrations-, einer Nanofiltrations- und einer Reversosmosemembran der Fa. Desalination Systems, USA, bestückt. Bei 25°C und einem Moduleingangsdruck von 20 bar wurde zunächst die Permeationsleistung mit vollentsalztem Wasser bestimmt. Dem Feed wurde anschließend PAS (Mol-Gew. ca. 6000) in zwei Konzentrationen zugesetzt. Die Auswirkungen auf die Permeationsleistungen wurden beobachtet.

### Ergebnisse:

| Zusatz PAS | Permeatflußdichten [l/(m²d)] | | |
|---|---|---|---|
| | UF-Membran | NF-Membran | RO-Membran |
| 0 ppm | 1200 | 2330 | 800 |
| 50 ppm | 1200 | 2330 | 800 |
| 500 ppm | 1150 | 2430 | 880 |

### Beispiel 2

a) 200 1 einer Lösung, hergestellt aus vollentsalztem Wasser und 2.0 g/l CaSO₄2 H₂O, wurden mit einer Nanofiltrationsmembran (Sulfatrückhalt > 95%) in Spiralwickelmodulbauform (2,5" x 40", 47 mil Spacer) zunächst um 50 % aufkonzentriert (Bedingungen: 25°C, 30 bar Modulausgangsdruck, 1.25 m³/h Modulanströmung). In Kreislauffahrweise, d. h. unter Rückführung von Retentat und Permeat in die Vorlage, wurde dann mehrfach die Permeatleistung gemessen.
b) Versuch a) wurde unter Zusatz von 50 ppm PAS (Mol.-Gew. 6000) wiederholt
c) Versuch a) wurde unter Zusatz von 50 ppm PAS (Mol.-Gew. 6000) und 1 % NaCl wiederholt. Nach ca. 3 h in Kreislauffahrweise wurde jetzt noch weiter aufkonzentriert, so daß im Feed eine CaSO₄2 H₂O Konzentration von etwa 14 g/l realisiert wurde.

### Ergebnis:

Ohne Zusatz brach der Permeatfluß durch auskristallisierendes CaSO₄2 H₂O (Löslichkeit in H₂O bei 25°C 2,9 g/l) zusammen. Mit PAS war eine 4,5 fache Übersättigung ohne Einbußen in der Permeationsleistung realisierbar. Zugesetzte Elektrolyte störten nicht.

### Ergebnis Beispiel 2:

Permeatflußdichte in l/m²·Tag in Abhängigkeit von der Zeit unter den Bedingungen von Beispiel 2a, 2b bzw. 2c und erreichbare CaSO₄-Konzentrationen.

| Zeit [min] | Permeatflußdichte Beispiel 2a [l/(m²d)] | Permeatflußdichte Beispiel 2b [l/(m²d)] | Permeatflußdichte Beispiel 2c [l/(m²d)] | Konzentration CaSO₄ [g/l] |
|---|---|---|---|---|
| 0 | 2793 | 2700 | 2592 | ca. 2,0 |
| 5 | 2793 | 2700 | 2592 | ca. 2,5 |
| 10 | 2793 | 2700 | 2592 | ca. 3,0 |
| 15 | 2793 | 2700 | 2592 | ca. 4,0 |
| 45 | 432 | 2120 | 2140 | ca. 4,0 |
| 75 | 295 | 2120 | 2140 | ca. 4,0 |
| 105 | 216 | 2120 | 2140 | ca. 4,0 |
| 135 | 180 | 2120 | 2140 | ca. 4,0 |
| 165 | 162 | 2120 | 2140 | ca. 4,0 |
| 195 | 149 | 2120 | 2140 | ca. 4,0 |
| 225 | 139 | 2120 | 2140 | ca. 4,0 |
| 230 | | 2120 | 2314 | ca. 5,0 |
| 235 | | 2120 | 2314 | ca. 7,5 |
| 240 | | 2120 | 2250 | ca. 14 |
| 270 | | | 2160 | ca. 14 |
| 300 | | | 2160 | ca. 14 |
| 330 | | | 2160 | ca. 14 |
| 360 | | | 2160 | ca. 14 |

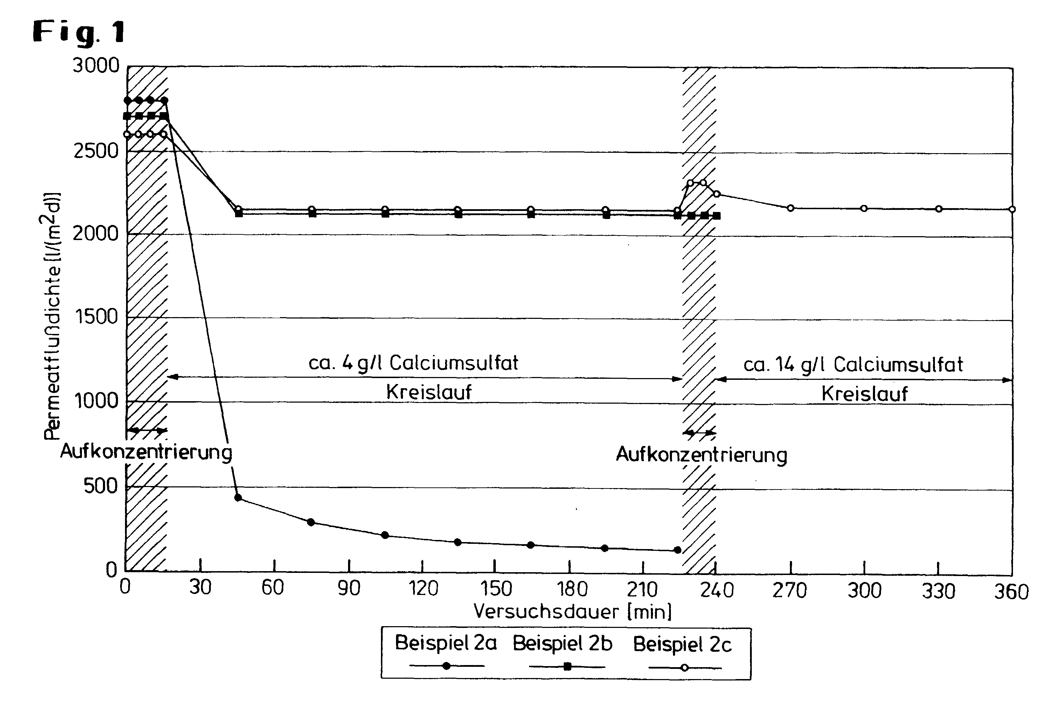

Fig. 1 zeigt die graphische Darstellung der Tabelle.

### Beispiel 3

Bei der Synthese eines sulfogruppenhaltigen Stilbenaufhellers wurde ein mit Calciumphosphat fluidisiertes Natriumhydrogencarbonat eingesetzt. Die Produktlösung mit Ca₃(PO₄)₂, CaCO₃, NaCl und dem Aufheller als wichtigen Inhaltsstoffen wurde mittels Nanofiltrations-Tubularmembranen (1.2 m Modul, 1/2") vom enthaltenen Synthesesalz (NaCl) befreit und auf etwa 55 % des Volumens aufkonzentriert (Modulanströmung 1 m³/h, 55°C, 25 Eingangsdruck). Der Calciumgehalt stieg von 70 mg/l auf 140 mg/l im Endkonzentrat an. Die Löslichkeitsgrenze von Ca₃(PO₄)₂ von 20 mg/l wurde deutlich überschritten. Durch den Zusatz von 100 ppm PAS wurden die gleichen Permeatleistungen erreicht wie bei der Bearbeitung von Produktlösung, die kein Ca₃(PO₄)₂ enthielt, d.h. ohne Verwendung von fluidisiertem Natriumhydrogencarbonat hergestellt wurde (Permeatflußdichten: 2300 l/(m²d) bei Diafiltration; 1000 l/(m²d) bei Aufkonzentrierung). Nach dem Versuch ließ sich die ursprüngliche Permeatleistung durch Spülen mit Wasser wieder erreichen.

### Beispiel 4

Gab man zu 500 ml einer Lösung, enthaltend 1 mmol Natriumcarbonat, 1 mmol Natriumsulfat und 1 mmol Natriumfluorid, 500 ml einer Lösung enthaltend 3 mmol Calciumchlorid, so resultierte eine Lösung, die bezüglich CaF₂ 4,5-fach und bezüglich CaCO₃ 7-fach übersättigt war und aus der sich bei pH >8 rasch ein voluminöser Niederschlag und bei pH 5 verzögert ein feinkristalliner Niederschlag bildete. Bei Zusatz von 50 ppm PAS (Mol-Gew. 6000) unterblieb die Bildung der Niederschläge.

### Beispiel 5

Schwefelsaure Mutterlauge einer Farbstoffproduktion wurde vor der membrantechnischen Aufarbeitung durch Zugabe von Kalkmilch neutralisiert. Nach Abtrennung des Neutralisationsschlammes wurde die jetzt bezüglich Gips gesättigte Lösung mittels Nanofiltrationsmembranen in Spiralwickelmodulbauform aufkonzentriert (2.5" x 40", 47 mil, 30 bar Moduleingangsdruck, 25°C, Modulanströmung 1250 1/h). Folgende Versuchseinstellungen wurden verglichen:
a) Während der Aufkonzentrierung auf 20 % des Startvolumens und in einer anschließenden Kreislauffahrweise wurde der Permeatfluß gemessen
b) Dem Feed wurden 50 ppm einer Mischung aus PAS und Polyacrylsäure (3:1) zugesetzt.

### Ergebnis:

Die Permeatleistungen bei Versuch 5b) waren während Aufkonzentrierungs- und Kreislaufphase signifikant höher als ohne Zusatz.

### Ergebnis Beispiel 5:

Permeatflußdichte in l/m²·Tag in Abhängigkeit von der Zeit unter den Bedingungen von Beispiel 5a bzw. 5b und erreichbare CaSO₄-Konzentrationen.

| Zeit [min] | Permeatflußdichte Beispiel 5a [l/(m²d)] | Permeatflußdichte Beispiel 5b [l/(m²d)] | Konzentration CaSO₄ [g/l] |
|---|---|---|---|
| 0 | 1371 | 1371 | ca. 3,0 |
| 10 | 1143 | 1231 | ca. 3,5 |
| 20 | 1032 | 1116 | ca. 4,0 |
| 30 | 1000 | 1032 | ca. 5,0 |
| 40 | 889 | 980 | ca. 6,0 |
| 50 | 788 | 914 | ca. 8,5 |
| 60 | 667 | 873 | ca. 14,5 |
| 90 | 320 | 762 | ca. 14,5 |
| 120 | 267 | 632 | ca. 14,5 |
| 150 | 202 | 600 | ca. 14,5 |
| 180 | 145 | 600 | ca. 14,5 |
| 210 | 121 | 565 | ca. 14,5 |
| 240 | 114 | 533 | ca. 14,5 |

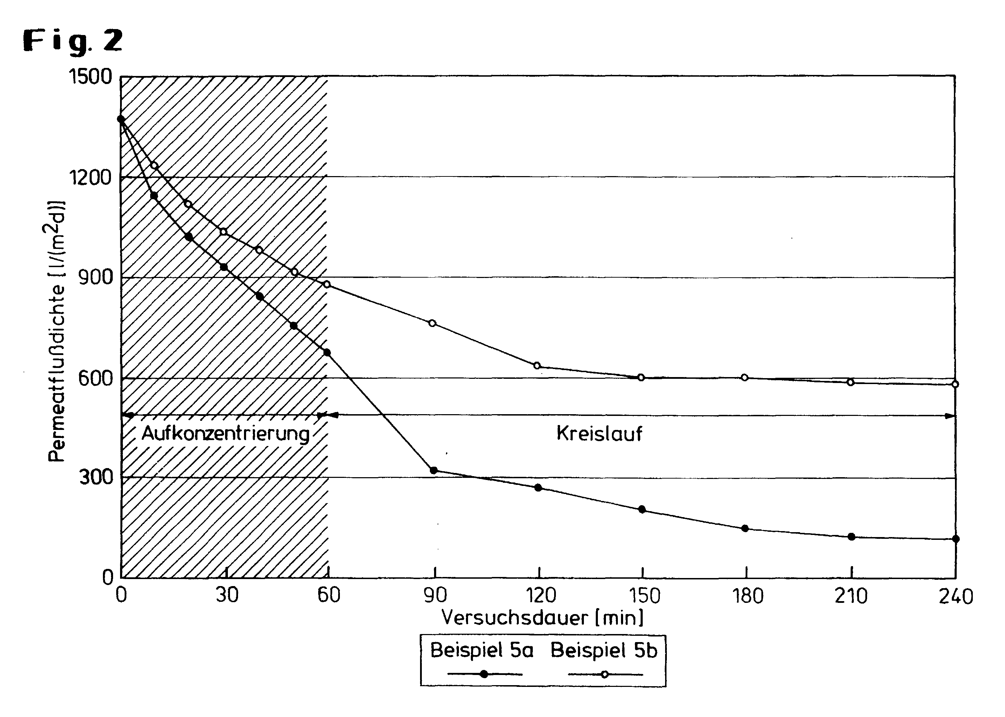

Fig. 2 zeigt die graphische Darstellung der Tabelle.

## Patentansprüche

1. Verfahren zur Durchführung von Membranprozessen zur Behandlung wässriger Feeds mit anorganischen und organischen Inhaltsstoffen unter Verhinderung oder Verzögerung der Scale-Bildung auf den Membranen durch Zusatz eines Scale-Inhibitors, **dadurch gekennzeichnet, dass** als Scale-Inhibitor Gemische von Polyasparaginsäuren mit Emulgatoren der Alkylsulfonate und der Alkoxylate eingesetzt werden, wobei die Polyasparaginsäuren in einer Menge von 1 bis 50 000 ppm, bezogen auf das wässrige Feed, eingesetzt werden.

2. Verfahren nach Anspruch 1, **dadurch gekennzeichnet, dass** Gemische von Polyasparaginsäuren mit Emulgatoren, in Gegenwart von Polyacrylaten oder Phosphonaten oder einem Gemisch von ihnen eingesetzt werden.

3. Verfahren nach Anspruch 1, **dadurch gekennzeichnet, dass** Polyasparaginsäuren eingesetzt werden, die ein Gewichtsmittel M_{w} von 500 bis 50 000, bevorzugt 1 000 bis 20 000, besonders bevorzugt 1500 bis 10 000, bestimmt durch Gelpermeationschromatographie, aufweisen.

4. Verfahren nach Anspruch 1, **dadurch gekennzeichnet, dass** Polyasparaginsäuren eingesetzt werden, die hergestellt werden aus Maleinsäureanhydrid und Ammoniak in Gegenwart von Wasser oder aus deren Folgeprodukten wie z.B. Maleinsäure-NH₄-Salz, Maleinamidsäure, Asparaginsäure und Asparagin sowie den Ammoniumsalzen von Maleinsäure, Maleinamidsäure, Asparaginsäure, Asparagin und Iminodibernsteinsäure oder deren Gemische durch thermische Kondensation gegebenenfalls in Gegenwart von sauren Katalysatoren zu Polysuccinimiden und anschließender Solvolyse oder Hydrolyse z.B. zu Polyasparaginsäure-Salzen.

5. Verfahren nach Anspruch 4, **dadurch gekennzeichnet, dass** die Polyasparaginsäuren als Na-Salze eingesetzt werden.

6. Verfahren gemäß Anspruch 1, **dadurch gekennzeichnet, dass** als Emulgatoren lineare C₁₂-C₁₇-Alkylsulfonate und Polyether auf Basis ungesättigter und/oder gesättigter C₁₀-C₂₀-Alkanole und 6 bis 60 Ethylenoxid-Einheiten, eingesetzt werden.

7. Verfahren nach Anspruch 1, **dadurch gekennzeichnet, dass** die Membranprozesse bei einem pH-Wert von 3 bis 12,5 durchgeführt werden.

8. Verfahren nach Anspruch 1, **dadurch gekennzeichnet, dass** die Polyasparaginsäuren und die Gesamtheit der Emulgatoren im Gewichtsverhältnis bis 1:99 im Gemisch eingesetzt werden.

9. Verfahren nach Anspruch 1, **dadurch gekennzeichnet, dass** als Membranen Nanofiltrations- bzw. Ultrafiltrationsmembranen angewandt werden.

10. Verfahren nach Anspruch 1, **dadurch gekennzeichnet, dass** Reversosmosemembranen mit einer selektiven Trennschicht aus Polyamid angewandt werden.

11. Verfahren nach Anspruch 1, **dadurch gekennzeichnet, dass** die Membranprozesse bei einem pH-Wert von 4,5 bis 11 durchgeführt werden.

12. Verfahren nach Anspruch 1, **dadurch gekennzeichnet, dass** die Membranprozesse bei einem pH-Wert von 6 bis 10 durchgeführt werden.

## Claims

1. Process for carrying out membrane processes for the treatment of aqueous feeds with inorganic and organic ingredients with inhibition or delay of scale formation on the membranes by addition of a scale inhibitor, **characterized in that** mixtures of polyaspartic acids with emulsifiers of alkylsulphonates and of alkoxylates are used as scale inhibitor, the polyaspartic acids being used in an amount of 1 to 50,000 ppm, based on the aqueous feed.

2. Process according to Claim 1, **characterized in that** mixtures of polyaspartic acids with emulsifiers are used in the presence of polyacrylates or phosphonates or a mixture of them.

3. Process according to Claim 1, **characterized in that** polyaspartic acids which have a weight average M_{w} of 500 to 50,000, preferably 1000 to 20,000, particularly preferably 1500 to 10,000, determined by gel permeation chromatography, are used.

4. Process according to Claim 1, **characterized in that** polyaspartic acids which are prepared from maleic anhydride and ammonia in the presence of water or from their secondary products, such as, for example, maleic acid NH₄ salt, maleamic acid, aspartic acid and asparagine and the ammonium salts of maleic acid, maleamic acid, aspartic acid, asparagine and immiodisuccinic acid or their mixtures, by thermal condensation, optionally in the presence of acidic catalysts, to give polysuccinimides and subsequent solvolysis or hydrolysis, for example to give polyaspartic acid salts, are used.

5. Process according to Claim 4, **characterized in that** the polyaspartic acids are used as Na salts.

6. Process according to Claim 1, **characterized in that** the emulsifiers used are linear C₁₂-C₁₇-alkanesulphonates and polyethers based on unsaturated and/or saturated C₁₀-C₂₀-alkanols and 6 to 60 ethylene oxide units.

7. Process according to Claim 1, **characterized in that** the membrane processes are carried out at a pH value of from 3 to 12.5.

8. Process according to Claim 1, **characterized in that** the polyaspartic acids and the totality of the emulsifiers are used in the weight ratio of up to 1:99 in the mixture.

9. Process according to Claim 1, **characterized in that** nanofiltration membranes or ultrafiltration membranes are used as membranes.

10. Process according to Claim 1, **characterized in that** reverse osmosis membranes having a selective separation layer of polyamide are used.

11. Process according to Claim 1, **characterized in that** the membrane processes are carried out at a pH value of from 4.5 to 11.

12. Process according to Claim 1, **characterized in that** the membrane processes are carried out at a pH value of from 6 to 10.

## Revendications

1. Procédé pour la mise en oeuvre d'opérations sur membranes en vue du traitement de courants d'alimentation aqueux à constituants minéraux et organiques en évitant ou en retardant les formations de tartre sur les membranes par addition d'un agent antitartre, **caractérisé en ce que** l'on utilise en tant qu'agent antitartre un mélange d'acides polyaspartiques et d'agents émulsionnants des types alkylsulfonates et alcoxylates, les acides polyaspartiques étant mis en oeuvre en quantité de 1 à 50 000 ppm par rapport au courant d'alimentation aqueux.

2. Procédé selon la revendication 1, **caractérisé en ce que** l'on utilise des mélanges d'acides polyaspartiques et d'agents émulsionnants en présence de polyacrylates ou de phosphonates ou leurs mélanges.

3. Procédé selon la revendication 1, **caractérisé en ce que** l'on utilise des acides polyaspartiques ayant un poids moléculaire moyen, moyenne en poids Mw, de 500 à 50 000, de préférence de 1000 à 20 000 et plus spécialement de 1 500 à 10 000, déterminé par chromatographie de perméation de gel.

4. Procédé selon la revendication 1, **caractérisé en ce que** l'on utilise des acides polyaspartiques qui ont été préparés à partir de l'anhydride maléique et de l'ammoniac en présence d'eau ou à partir de produits de conversion des précédents tels que le sel d'ammonium de l'acide maléique, le monoamide maléique, I'acide aspartique et l'asparagine, ou à partir des sels d'ammonium de l'acide maléique, du monoamide maléique, de l'acide aspartique, de l'asparagine et de l'acide iminodisuccinique et de leurs mélanges par condensation à la chaleur éventuellement en présence de catalyseurs acides, cette condensation donnant des polysuccinimides qu'on soumet ensuite à solvolyse ou hydrolyse, par exemple en sels d'acides polyaspartiques.

5. Procédé selon la revendication 4, **caractérisé en ce que** les acides polyaspartiques sont mis en oeuvre à l'état de sels de sodium.

6. Procédé selon la revendication 1, **caractérisé en ce que** l'on utilise en tant qu'agents émulsionnants des alkylsulfonates linéaires en C12-C17 et des polyéthers à base d'alcanols saturés et/ou insaturés en C10-C20 et de 6 à 60 motifs d'oxyde d'éthylène.

7. Procédé selon la revendication 1, **caractérisé en ce que** les opérations sur membranes sont réalisées à un pH de 3 à 12,5.

8. Procédé selon la revendication 1, **caractérisé en ce que** les acides polyaspartiques et la totalité des agents émulsionnants sont mis en oeuvre à des proportions relatives en poids allant jusqu'à 1:99 dans le mélange.

9. Procédé selon la revendication 1, **caractérisé en ce que** les membranes utilisées sont des membranes de nano-filtration et/ou d'ultra-filtration.

10. Procédé selon la revendication 1, **caractérisé en ce que** l'on utilise des membranes d'osmose inverse à couche de séparation sélective en polyamide.

11. Procédé selon la revendication 1, **caractérisé en ce que** les opérations sur membranes sont réalisées à un pH de 4,5 à 11.

12. Procédé selon la revendication 1, **caractérisé en ce que** les opérations sur membranes sont réalisées à un pH de 6 à 10.
